# EUROPÄISCHE PATENTANMELDUNG

(11) **EP 1 832 772 A2**
(43) Veröffentlichungstag der Anmeldung: **12.09.2007**
(21) Anmeldenummer: 07003725.4
(22) Anmeldetag: 23.02.2007
(51) Int. Cl.: F16D 13/75

(54) **Vorrichtung zum Toleranzausgleich für eine Kupplung**

(30) Priorität: 10.03.2006 US 781210 P
(71) Anmelder: LuK Lamellen und Kupplungsbau Beteiligungs KG, 77815 Bühl (DE)
(72) Erfinder: Hemphill, Jeffrey, 44321 Copley Ohio (US); Smith, David, 44281 Wadsworth Ohio (US); Tuncay, Vedat, 77833 Otterweier (DE)

(57) **Zusammenfassung**

Vorrichtung zum Toleranzausgleich für eine Kupplung, wobei die Kupplung ein Eingangselement (4) und ein Ausgangselement (5) aufweist und eine Drehung des Eingangselements zu dem Ausgangselement wahlweise überträgt und unterbricht.
Diese umfasst ein Verbindungselement (10), das hinsichtlich des Eingangselements koaxial drehbar gestützt ist, eine Rückplatte (19), die koaxial an dem Verbindungselement gestützt ist, axial entlang des Verbindungselements verschiebbar ist und an einer externen Vorrichtung, insbesondere ein Getriebe befestigbar ist, und eine Fixiervorrichtung (20,22), die die Rückplatte (19) an einer axialen Position hinsichtlich des Verbindungselements fixiert, wenn das Verbindungselement relativ zu der Rückplatte verdreht wird.

## Beschreibung

Die vorliegende Erfindung bezieht sich auf eine Vorrichtung zum Toleranzausgleich für eine Kupplung und auf eine Kupplung, die mit der Vorrichtung versehen ist.

Eine Kupplung, wie sie z.B. in der DE 10 2005 003 505 A1 offenbart ist, wird üblicherweise zwischen einem Motor und einem Getriebe eingebaut, um wahlweise einen Kraftfluss zwischen dem Motor und dem Getriebe herzustellen und zu unterbrechen. Sowohl der Motor als auch das Getriebe sind üblicherweise an einer festen Position in einem Aggregat wie z.B. ein Fahrzeug eingebaut, wobei eine Gegendruckscheibe der Kupplung mit einer Kurbelwelle des Motors verbunden wird, und eine Kupplungsscheibe der Kupplung mit dem Getriebe verbunden wird, wobei die Kupplungsscheibe bei eingerückter Kupplung gegen die Gegendruckscheibe gedrückt wird. Vorzugsweise ist zwischen der Kurbelwelle des Motors und der Gegendruckscheibe ein Schwungrad wie z.B. ein so genanntes Zweimassenschwungrad angeordnet.

Beim Einbau der Kupplung können jedoch Verschiebungen und Toleranzen entstehen, die eine Last auf das Zweimassenschwungrad oder auch auf die Kupplungsscheibe aufbringen.

Es ist die Aufgabe der vorliegenden Erfindung, eine Vorrichtung zum Toleranzausgleich für eine Kupplung und eine Kupplung vorzusehen, bei denen auch nach dem Einbau der Kupplung z.B. in ein Fahrzeug Toleranzen ausgeglichen werden können.

Diese Aufgabe wird durch die Vorrichtung zum Toleranzausgleich mit den Merkmalen des Anspruchs 1 gelöst. Vorteilhafte Weiterbildungen sind in den abhängigen Ansprüchen definiert.

Die erfindungsgemäße Vorrichtung zum Toleranzausgleich ist für eine Kupplung geeignet, die ein Eingangselement und ein Ausgangselement aufweist und eine Drehung des Eingangselements zu dem Ausgangselement wahlweise überträgt und unterbricht. Die Vorrichtung zum Toleranzausgleich hat ein Verbindungselement, das hinsichtlich des Eingangselements koaxial drehbar gestützt ist, eine Rückplatte, die koaxial an dem Verbindungselement gestützt ist, axial entlang des Verbindungselements verschiebbar ist und an einer externen Vorrichtung, insbesondere ein Getriebe befestigbar ist, und eine Fixiervorrichtung, die die Rückplatte an einer axialen Position hinsichtlich des Verbindungselements fixiert, wenn das Verbindungselement relativ zu der Rückplatte verdreht wird.

In vorteilhafter Weise erfordert die Vorrichtung zum Toleranzausgleich keinen zusätzlichen axialen Raum und nur einen kleinen radialen Raum. Der Vorrichtung arbeitet in vorteilhafter Weise vollautomatisch, sodass der Einbau der Kupplung erleichtert ist.

Weitere Merkmale und Vorteile der vorliegenden Erfindung werden aus der folgenden Beschreibung von Ausführungsbeispielen ersichtlich. Dabei zeigen
Fig. 1 schematisch eine Längsschnittansicht einer Vorrichtung zum Toleranzausgleich für eine Kupplung gemäß einem ersten Ausführungsbeispiel der vorliegenden Erfindung;
Fig. 2 eine Einzelheit der Vorrichtung zum Toleranzausgleich für eine Kupplung gemäß der Fig. 1;
Fig. 3 eine Querschnittsansicht der Vorrichtung zum Toleranzausgleich für eine Kupplung gemäß den Figuren 1 und 2;
Fig. 4 eine Einzelheit einer Vorrichtung zum Toleranzausgleich für eine Kupplung gemäß einem zweiten Ausführungsbeispiel der vorliegenden Erfindung.

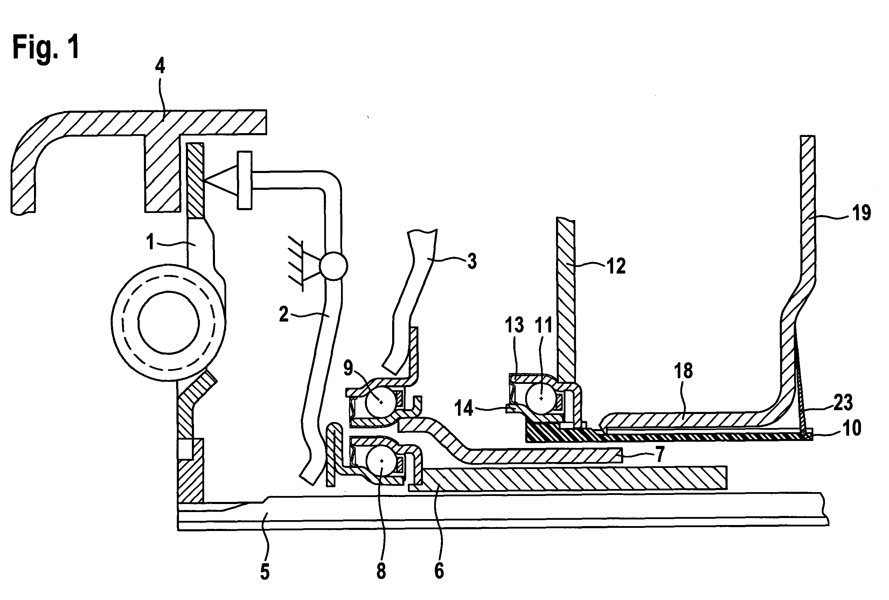

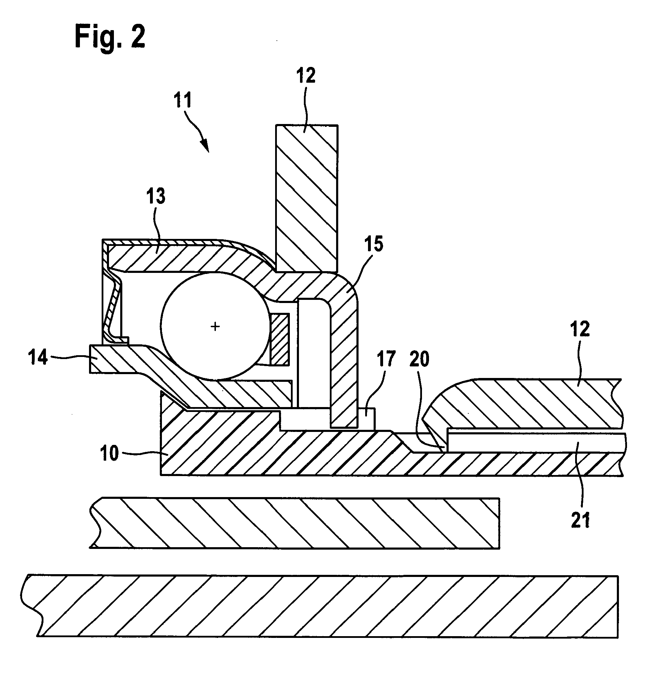

Die Fig. 1 zeigt schematisch eine Längsschnittansicht einer Vorrichtung zum Toleranzausgleich für eine Kupplung gemäß einem ersten Ausführungsbeispiel der vorliegenden Erfindung, und die Fig. 2 zeigt eine Einzelheit der Vorrichtung zum Toleranzausgleich für eine Kupplung gemäß der Fig. 1.

Die Kupplung gemäß dem ersten Ausführungsbeispiel ist eine Reibungskupplung mit zwei Kupplungsscheiben 1, von denen in Fig. 1 nur eine Kupplungsscheibe 1 schematisch gezeigt ist. Diese Kupplungen sind auch als Doppel-Kupplungen allgemein bekannt. Im Normalzustand ist die Kupplung eingerückt, indem ein erstes und ein zweites Hebelelement 2, 3 gemäß der Fig. 1 im Gegenuhrzeigersinn in einer Einrückrichtung mittels nicht gezeigter Federn vorgespannt werden und die beiden Kupplungsscheiben 1 an ein Eingangselement in Gestalt einer Gegendruckscheibe 4 drücken. Die Gegendruckscheibe 4 ist über ihre radial äußere Seite mit einem Schwungrad (nicht gezeigt) und einer Kurbelwelle (nicht gezeigt) einer Kraftmaschine verbindbar. Das Schwungrad ist vorzugsweise als ein allgemein bekanntes Zweimassenschwungrad ausgeführt. Das Zweimassenschwungrad verfügt im Wesentlichen über eine innere Ringscheibe und eine äußere Ringscheibe, die über eine in Umfangsrichtung wirkende Feder miteinander verbunden sind. In vorteilhafter Weise hat das Schwingungssystem Kurbelwelle-Schwungrad-Kupplung dadurch einen besseren Gleichförmigkeitsgrad.

Die Kupplungsscheibe 1 gelangt an ihrer radial äußeren Seite bei eingerückter Kupplung mit der Gegendruckscheibe 4 in Eingriff. Die Kupplungsscheibe 1 wiederum ist an ihrer radial inneren Seite mit einem Ausgangselement in Gestalt einer Getriebewelle 5 koppelbar. Bei eingerückter Kupplung ist somit ein Kraftfluss zwischen der Kraftmaschine und dem Getriebe hergestellt.

Ein Ausrücksystem der Kupplung schwenkt die beiden Hebelelemente 2, 3 im Uhrzeigersinn gemäß der Fig. 1, d.h. in einer Ausrückrichtung, sodass der Eingriff zwischen der Kupplungsscheibe 1 und der Gegendruckscheibe 4 gelöst wird. Das Ausrücksystem besteht aus einer ersten Schiebehülse 6, die das erste Hebelelement 2 über ein erstes Wälzlager 8 betätigt, und einer zweiten Schiebehülse 7, die das zweite Hebelelement 3 über ein zweites Wälzlager 9 betätigt. Die erste und die zweite Schiebehülse 6, 7 sind in einer Ausrückrichtung (nach links gemäß der Fig. 1) verschiebbar, wodurch die Kupplung ausgerückt wird.

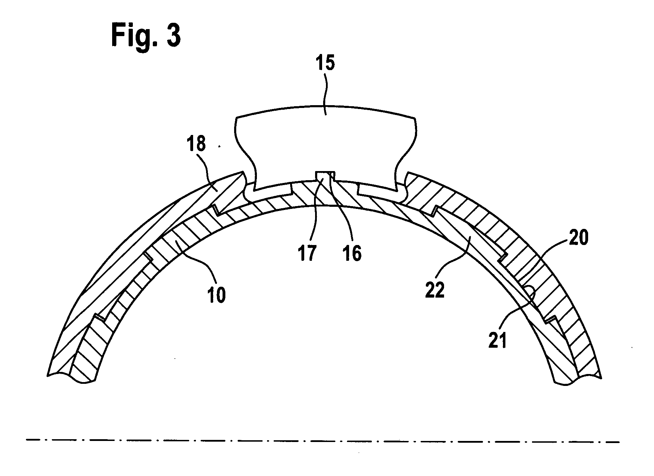

Die Vorrichtung zum Toleranzausgleich für eine Kupplung wird im Einzelnen unter Bezugnahme auf die Figuren 2 und 3 beschrieben. Ein Verbindungselement in Gestalt einer Hohlwelle 10 ist über ein drittes Wälzlager 11 drehbar an einer Abdeckung 12 gestützt, die mit der Gegendruckscheibe 4 verbunden ist und das Innere der Kupplung mit den darin angeordneten Kupplungsscheiben 1 abdeckt. Ein äußerer Laufring 13 des dritten Wälzlagers 11 ist an der Abdeckung 12 befestigt, und ein innerer Laufring 14 des dritten Wälzlagers 11 ist an der Hohlwelle 10 befestigt. Wie dies in den Figuren 2 und 3 gezeigt ist, hat der äußere Laufring 13 einen lappenartigen Fortsatz 15, der sich zu der Hohlwelle 10 erstreckt. Am Ende des lappenartigen Fortsatzes 15 ist eine Aussparung 16, die mit einer Nase 17 im Eingriff ist, die entsprechend an der Hohlwelle 10 vorgesehen ist. Die Aussparungen 16 und die Nase 17 bilden eine lösbare Drehsperre, die eine relative Drehung der Hohlwelle 10 zu der Abdeckung 12 unterbindet. Die Nase 17 hat eine bestimmte Scherfestigkeit, sodass eine relative Drehung der Hohlwelle 10 zu der Abdeckung 12 ermöglicht wird, falls die Nase 17 durch die Aussparung abgeschert wird.

Über die Hohlwelle 10 ist eine röhrenartige Erweiterung 18 einer Rückplatte 19 geschoben. Die röhrenartige Erweiterung 18 ist axial entlang der Hohlwelle 10 verschiebbar.

An dem Ende der röhrenartigen Erweiterung 18 sind in mehreren Intervallen Fixiervorrichtungen in Gestalt von Schneidkanten 20 angeordnet, die radial nach innen zur Hohlwelle 10 gerichtet sind. Die Schneidkanten 20 sind in entsprechende Nuten 21 der Hohlwelle 10 axial verschiebbar angeordnet, wie dies in der Fig. 3 ersichtlich ist. Zwischen den Nuten 21 befinden sich Vorsprünge 22 der Hohlwelle 10.

Die Hohlwelle 10 ist aus einem Kunststoff gefertigt, und die Schneidkante 20 kann sich bei einer erzwungenen Drehung der röhrenartigen Erweiterung 18 relativ zu der Hohlwelle 10 in die Vorsprünge 22 der Hohlwelle 10 in Umfangsrichtung hinein schneiden. Vorzugsweise kann ein geeignetes Stoppelement (nicht gezeigt) vorgesehen sein, das die eindringenden Schneidkanten 20 an einer vorbestimmten Position in Umfangsrichtung stoppt.

An dem zum dritten Wälzlager 11 entgegengesetzten Ende der Hohlwelle 10 ist eine Feder 23 angeordnet, die einerseits am Ende der Hohlwelle 10 befestigt ist und andererseits mit der Rückplatte 19 im Eingriff ist. Die Feder 23 spannt die Hohlwelle 10 mit einer vorbestimmten Vorspannkraft bezüglich der Rückplatte 19 in der axialen Richtung vor, d.h. im Falle der Fig. 1 nach links. Alternativ kann die Feder 23 die Hohlwelle 10 in der axialen Richtung bezüglich der Rückplatte 19 nach rechts gemäß der Fig. 1 vorspannen. Vorzugsweise hat die Feder 23 eine relativ flach ansteigende Federkurve, d.h. die Federkraft ändert sich kaum entlang des Verstellwegs der Feder 23.

Die Funktion der Vorrichtung bzw. des Mechanismus zum Toleranzausgleich für eine Kupplung wird nun beschrieben.

Im Auslieferungszustand der Kupplung ist die Aussparung 16 im lappenartigen Fortsatz 15 des äußeren Laufrings 13 des dritten Wälzlagers 11 mit der Nase 17 an der Hohlwelle 10 im Eingriff, sodass eine relative Drehung der Hohlwelle 10 zur Abdeckung 12 unterbunden wird. Wenn die Kupplung mit dem integrierten Ausrücksystem nun z.B. in ein Fahrzeug montiert wird, dann werden die Kupplung und das Ausrücksystem als eine Einheit in eine Kupplungsglocke eines Getriebes eingefügt. Dann wird die Rückplatte 19 mit dem Getriebe des Fahrzeugs verbunden. Anschließend werden das Getriebe und die daran befestigte Kupplung mit dem Zweimassenschwungrad seitens der Kurbelwelle des Fahrzeugs verbunden. Bei dieser Montagestufe ist die Hohlwelle 10 innerhalb der röhrenartigen Erweiterung 18 der Rückplatte 19 frei verschiebbar, wobei sich zwischen der Federkraft des Zweimassenschwungrads und der Vorspannkraft der Feder 23 ein Gleichgewicht einstellt. Der Kraftfluss der Federvorspannung verläuft von der Feder 23 über die Hohlwelle 10, das dritte Wälzlager 11, die Abdeckung 12 und die Gegendruckplatte 4 zum Zweimassenschwungrad. Somit erhält die Flexplatte eine vorbestimmte Vorspannung in der axialen Richtung entsprechend der Feder 23. Anschließend wird der Motor betrieben, und die Kurbelwelle wird gedreht, sodass sich bei eingerückter Kupplung auch die Gegendruckscheibe 4 und die damit verbundene Abdeckung 12 drehen. Da die Aussparung 16 in dem äußeren Laufring 13 des dritten Lagers 11 mit der Nase 17 der Hohlwelle 10 im Eingriff ist, wird auch die Hohlwelle 10 gedreht. Da die Rückplatte 19 bereits an dem Getriebe befestigt wurde, werden die Hohlwelle 10 und die Rückplatte 19 zueinander verdreht. Infolgedessen schneiden sich die Schneidkanten 20 der röhrenartigen Erweiterung 18 in die Vorsprünge 22 der Hohlwelle 10 hinein, bis sie durch das Stoppelement (nicht gezeigt) gestoppt werden. Dadurch wird die Hohlwelle 10 an der röhrenartigen Erweiterung 18 fixiert.

Wenn das zwischen der Abdeckung 12 und der Hohlwelle 10 übertragene Drehmoment schließlich eine Scherfestigkeit der Nase 17 der Hohlwelle 10 überschreitet, dann wird die Nase 17 der Hohlwelle 10 durch die Aussparung 16 im äußeren Laufring 13 abgeschert. Dadurch können sich die Hohlwelle 10 und die damit verbundene Rückplatte 19 über das dritte Wälzlager 11 relativ zu der Abdeckung 12 frei drehen. Auch wenn sich die Schneidkanten 20 in die Vorsprünge 22 hinein geschnitten haben, bleibt die axiale Position der Hohlwelle 10 bezüglich der Rückplatte 19 bestehen, und die Vorspannkraft in dem Zweimassenschwungrad wird aufrechterhalten.

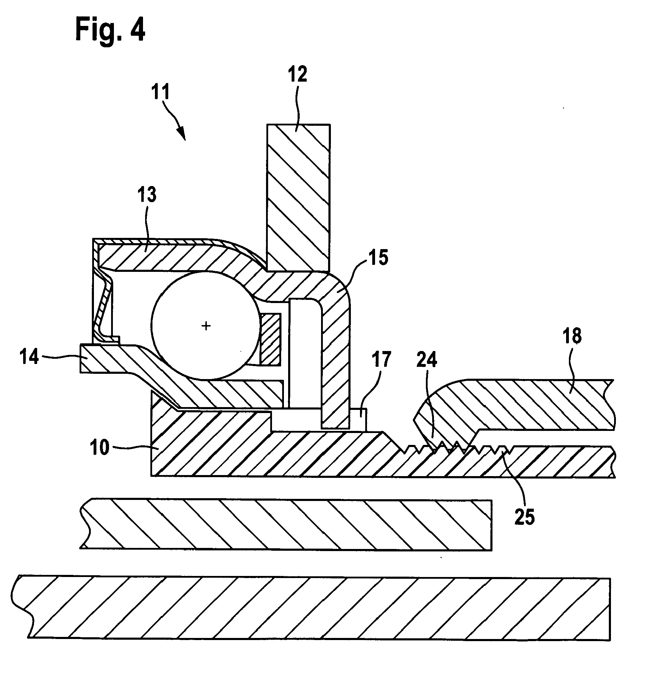

Die Fig. 4 zeigt eine Einzelheit einer Vorrichtung zum Toleranzausgleich für eine Kupplung gemäß einem zweiten Ausführungsbeispiel der vorliegenden Erfindung. Das zweite Ausführungsbeispiel unterscheidet sich von dem ersten Ausführungsbeispiel in der Gestaltung der Fixiervorrichtung. Gleiche oder ähnliche Bauelemente hinsichtlich des ersten Ausführungsbeispieles sind mit denselben Bezugszeichen versehen.

Während das erste Ausführungsbeispiel Schneidkanten 20 und Vorsprünge 22 aufweist, so hat das zweite Ausführungsbeispiel stattdessen ein am Ende der röhrenartigen Erweiterung 18 der Rückplatte vorgesehenes Innengewinde 24 und ein an der entsprechenden Stelle der Hohlwelle 10 vorgesehenes Außengewinde 25. Das Innengewinde 24 hat eine geringfügig unterschiedliche Gewindesteigung als das Außengewinde 25.

Wenn die Hohlwelle 10 relativ zu der röhrenartigen Erweiterung 18 verdreht wird, dann gelangt das Innengewinde 24 mit dem Außengewinde 25 in einen Gewindeeingriff, wobei sich das Außengewinde 25 in dem Innengewinde 24 verklemmt, sodass die Hohlwelle 10 an der röhrenartigen Erweiterung 18 fixiert wird.

Der Vorteil des zweiten Ausführungsbeispieles gegenüber dem ersten Ausführungsbeispiel liegt darin, dass der Gewindeeingriff zwischen dem Innengewinde 24 und dem Außengewinde 25 wieder lösbar ist, wohingegen die Fixierung mittels der Schneidkanten 20 und Vorsprünge 22 bei dem ersten Ausführungsbeispiel irreversibel ist. Andererseits hat das erste Ausführungsbeispiel den Vorteil, dass die Toleranzen und die Vorspannung des Zweimassenschwungrads sehr genau eingestellt werden können, wohingegen der Gewindeeingriff zwischen dem Innengewinde 24 und dem Außengewinde 25 bei dem zweiten Ausführungsbeispiel nur eine Verschiebung der Hohlwelle 10 im Rahmen der Gewindesteigung ermöglicht, d.h. mit einer Toleranz von etwa 1 mm.

Die dargestellten Ausführungsbeispiele können folgendermaßen abgewandelt werden: Die Feder 23 kann weggelassen werden, wodurch die Toleranz und ggf. eine Vorspannkraft auf das Zweimassenschwungrad manuell einstellbar sind. Die Erfindung funktioniert auch bei einer kinematischen Umkehr der Kupplung, d.h. wenn das Eingangselement und das Ausgangselement der Kupplung kinematisch vertauscht werden.

### Bezugszeichenliste

- 1: Kupplungsscheibe
- 2: Erstes Hebelelement
- 3: Zweites Hebelelement
- 4: Gegendruckscheibe
- 5: Getriebewelle
- 6: Erste Schiebehülse
- 7: Zweite Schiebehülse
- 8: Erstes Wälzlager
- 9: Zweites Wälzlager
- 10: Hohlwelle
- 11: Drittes Wälzlager
- 12: Abdeckung
- 13: Äußerer Laufring
- 14: Innerer Laufring
- 15: Lappenartiger Fortsatz
- 16: Aussparung
- 17: Nase
- 18: Röhrenartige Erweiterung
- 19: Rückplatte
- 20: Schneidkante
- 21: Nut
- 22: Vorsprung
- 23: Feder
- 24: Innengewinde
- 25: Außengewinde

## Patentansprüche

1. Vorrichtung zum Toleranzausgleich für eine Kupplung, wobei die Kupplung ein Eingangselement (4) und ein Ausgangselement (5) aufweist und eine Drehung des Eingangselements (4) zu dem Ausgangselement (5) wahlweise überträgt und unterbricht,
**gekennzeichnet durch**
ein Verbindungselement (10), das hinsichtlich des Eingangselements (4) koaxial drehbar gestützt ist,
eine Rückplatte (19), die koaxial an dem Verbindungselement (10) gestützt ist, axial entlang des Verbindungselements (10) verschiebbar ist und an einer externen Vorrichtung, insbesondere ein Getriebe befestigbar ist, und
eine Fixiervorrichtung (20, 22), die die Rückplatte (19) an einer axialen Position hinsichtlich des Verbindungselements (10) fixiert, wenn das Verbindungselement (10) relativ zu der Rückplatte (19) verdreht wird.

2. Vorrichtung nach Anspruch 1, **dadurch gekennzeichnet, dass** das Verbindungselement eine Hohlwelle (10) ist, die über ein Lager (11) an dem Eingangselement (4, 12) gestützt ist.

3. Vorrichtung nach einem der vorherigen Ansprüche, **dadurch gekennzeichnet, dass** diese eine Feder (23) umfasst, die das Verbindungselement (10) bezüglich der Rückplatte (19) vorspannt.

4. Vorrichtung gemäß einem der vorherigen Ansprüche, **dadurch gekennzeichnet, dass** die Fixiervorrichtung (20, 22) zumindest einen Vorsprung (22) aufweist, der sich an dem Verbindungselement (10) in dessen axialer Richtung erstreckt, und wobei die Fixiervorrichtung (20, 22) zumindest eine Schneidkante (20) aufweist, die an der Rückplatte (19) vorgesehen ist und sich bei der relativen Verdrehung des Verbindungselements (10) zu der Rückplatte (19) in den Vorsprung (22) schneidet.

5. Vorrichtung gemäß einem der Ansprüche 1-3, **dadurch gekennzeichnet, dass** die Fixiervorrichtung ein an der Rückplatte (19) ausgebildetes Innengewinde (24) und ein an dem Verbindungselement (10) ausgebildetes Außengewinde (25) aufweist, wobei das Innengewinde (24) eine geringfügig unterschiedliche Gewindesteigung als das Außengewinde (25) aufweist, und wobei das Innengewinde (24) mit dem Außengewinde (25) in einen Gewindeeingriff gelangt, wenn sich das Verbindungselement (10) relativ zu der Rückplatte (19) verdreht, sodass sich das Innengewinde (24) in dem Außengewinde (25) verklemmt.

6. Vorrichtung gemäß einem der vorherigen Ansprüche, **dadurch gekennzeichnet, dass** diese eine lösbare Drehsperre (16, 17) umfasst, die eine relative Drehung zwischen dem Verbindungselement (10) und dem Eingangselement (4) sperrt, und die die Sperre löst, wenn ein Drehmoment, das zwischen dem Verbindungselement (10) und dem Eingangselement (4) übertragen wird, einen vorbestimmten Schwellwert überschreitet.

7. Vorrichtung gemäß einem der vorherigen Ansprüche, **dadurch gekennzeichnet, dass** das Eingangselement (4) koaxial an einem Schwungrad und vorzugsweise einem Zweimassenschwungrad befestigbar ist, das mit einer Kurbelwelle eines Motors verbindbar ist.

8. Vorrichtung gemäß einem der vorherigen Ansprüche, **dadurch gekennzeichnet, dass** das Ausgangselement (5) eine Getriebewelle (5) eines Getriebes ist oder an eine Getriebewelle (5) anbringbar ist.

9. Kupplung mit einer Vorrichtung zum Toleranzausgleich, wobei die Kupplung ein Eingangselement (4), ein Kupplungselement (1), das an das Eingangselement (4) gedrückt wird, und ein Ausgangselement (5) aufweist, das mit dem Kupplungselement (1) verbunden ist, sodass eine Drehzahl des Eingangselements (4) zum Ausgangselement (5) übertragen wird, wenn das Kupplungselement (1) an das Eingangselement (4) gedrückt wird, und wobei die Kupplung des weiteren eine Abdeckung (12), die das Kupplungselement (1) abdeckt, und ein Ausrücksystem (2, 3, 6, 7, 8, 9) aufweist, das das Kupplungselement (1) von dem Eingangselement (4) trennt, wobei das Ausrücksystem und der Vorrichtung zum Toleranzausgleich an der Abdeckung (12) gesichert sind.
